# EUROPÄISCHE PATENTANMELDUNG

(11) **EP 3 876 143 A1**
(43) Veröffentlichungstag der Anmeldung: **08.09.2021**
(21) Anmeldenummer: 20160398.2
(22) Anmeldetag: 02.03.2020
(51) Int. Cl.: G06K 9/00, B60Q 1/08, G06K 9/20

(54) **SYSTEM ZUR ÜBERWACHUNG DER UMGEBUNG EINES KRAFTFAHRZEUGES**

(71) Anmelder: ZKW Group GmbH, 3250 Wieselburg (AT)
(72) Erfinder: Bierwipfl, Christoph, 3376 St. Martin (AT); Reiter, Thomas, 3325 Ferschitz (AT); Weißensteiner, Stefan, 3961 Waldenstein (AT)
(74) Vertreter: Patentanwaltskanzlei Matschnig & Forsthuber OG

(57) **Zusammenfassung**

Die Erfindung betrifft ein System (1) zur Überwachung der Umgebung eines Kraftfahrzeuges (100), wobei das System (1) umfasst eine Bilderfassungseinrichtung (2) zur Erfassung von Objekten in dem Erfassungsbereich (E1), eine Beleuchtungseinrichtung (3) zur Beleuchtung des Erfassungsbereiches (E1), und eine Umgebungserfassungseinrichtung (7) zur Erfassung eines Teils des Erfassungsbereiches (E1) der Bilderfassungseinrichtung (2), wobei das System (1) dazu eingerichtet ist, ein in einem Erfassungsbereich der zumindest einen Bilderfassungseinrichtung (2) befindliches Objekt, wenn es detektiert wurde, hinsichtlich seines Objekttyps zu klassifizieren, und jeweils einen Konfidenzwert, den sogenannten KO-Konfidenzwert, "KO", zu ermitteln, welcher KO angibt, mit welcher Wahrscheinlichkeit der Objekttyp eines detektierten Objektes von der Bilderfassungseinrichtung (2), insbesondere korrekt, festgestellt werden kann, und wobei das System (1) dazu eingerichtet ist, wenn sich im Erfassungsbereich (E1) ein Objekt (OBJ) befindet, in Abhängigkeit des KO für das detektierte Objekt (OBJ), oder wenn die Umgebungserfassungseinrichtung (7) das Objekt detektiert und von der Bilderfassungseinrichtung (2) dieses Objekt nicht detektiert wird, oder wenn die Umgebungserfassungseinrichtung (7) das Objekt detektiert und von der Bilderfassungseinrichtung (2) dieses Objekt detektiert wird, aber nicht klassifiziert werden kann, oder der KO einen definierten Grenzwert unterschreitet, oder wenn das System (1) oder die Umgebungserfassungseinrichtung (7) dazu eingerichtet ist, ein von der Umgebungserfassungseinrichtung (7) erfasstes, im Erfassungsbereich (E1) der Beleuchtungseinrichtung (2) liegendes und detektiertes Objekt hinsichtlich seines Typs zu klassifizieren und einen weiteren Konfidenzwert, den sogenannten NKO-Konfidenzwert, "NKO", zu ermitteln, welcher NKO angibt, mit welcher Wahrscheinlichkeit der Objekttyp des detektierten Objektes, insbesondere korrekt, festgestellt wurde, in Abhängigkeit des NKO für das Objekt (OBJ), oder in Abhängigkeit des KO und des NKO für das Objekt (OBJ), oder wenn KO < NKO gilt, oder die Beleuchtungseinrichtung (3) derart anzusteuern, dass die Beleuchtungsstärke im Bereich des Objektes (OBJ) erhöht oder verringert oder nicht verändert wird.

## Beschreibung

Die Erfindung betrifft ein System zur Überwachung der Umgebung eines Kraftfahrzeuges, insbesondere eines autonomen oder teilautonomen Kraftfahrzeuges, wobei das System umfasst:
- zumindest eine Bilderfassungseinrichtung, insbesondere eine optische Bilderfassungseinrichtung, wobei die Bilderfassungseinrichtung zur Erfassung eines Erfassungsbereiches der Umgebung, insbesondere zur Erfassung von Objekten in dem Erfassungsbereich eingerichtet ist,
- zumindest eine Beleuchtungseinrichtung, wobei der Erfassungsbereich der zumindest einen Bilderfassungseinrichtung teilweise, vorzugsweise vollständig, von der Beleuchtungseinrichtung beleuchtet werden kann, und
- zumindest eine Umgebungserfassungseinrichtung, wobei die Umgebungserfassungseinrichtung dazu eingerichtet ist, zumindest einen Teil des Erfassungsbereiches der Bilderfassungseinrichtung, vorzugsweise den gesamten Erfassungsbereich, zu erfassen, wobei die zumindest eine Umgebungserfassungseinrichtung insbesondere zur Detektierung von Objekten eingerichtet ist,
- wobei das System oder die Bilderfassungseinrichtung dazu eingerichtet ist,
   ∘ ein in einem Erfassungsbereich der zumindest einen Bilderfassungseinrichtung befindliches Objekt, wenn es detektiert wurde, hinsichtlich seines Objekttyps zu klassifizieren, und
   ∘ jeweils einen Konfidenzwert, den sogenannten KO-Konfidenzwert, "KO", zu ermitteln, welcher KO angibt, mit welcher Wahrscheinlichkeit der Objekttyp eines detektierten Objektes von der Bilderfassungseinrichtung, insbesondere korrekt, festgestellt werden kann.

Weiters betrifft die Erfindung einen Kraftfahrzeug-Scheinwerfer für ein Kraftfahrzeug, insbesondere ein autonomes oder teilautonomes Kraftfahrzeug, wobei der Kraftfahrzeug-Scheinwerfer ein solches System umfasst.

In einem Kraftfahrzeug, wie zum Beispiel einem Automobil, sind mittlerweile häufig Bilderfassungseinrichtungen vorgesehen, mittels welcher die Umgebung des Kraftfahrzeuges, beispielsweise der in Fahrtrichtung gesehen vor dem Kraftfahrzeug liegende Bereich überwacht werden kann. Die Bilderfassungseinrichtung kann z.B. eine Objekterkennungseinheit und/oder eine Mustererkennungseinheit umfassen, oder eine oder mehrere solcher Einheiten sind an die Bilderfassungseinrichtung angeschlossen. Auf diese Weise können z.B. Personen, und/oder vorausfahrende Fahrzeuge und/oder entgegenkommende Fahrzeuge, und/oder Straßenmarkierungen und/oder Verkehrszeichen etc. detektiert werden.

Im vorliegenden Text wird zwischen den Begriffen "detektieren" und "klassifizieren" (bzw. erkennen) unterschieden. Unter dem Begriff "detektieren" wird verstanden, dass eine Einrichtung zwar das Vorhandensein eines Objektes in seinem Erfassungsbereich erkennt ("Detektion"), aber nicht zwingend erkennt, um welches Objekt, d.h. um welchen Typ des Objektes (Person, PKW, LKW, Fahrrad, Verkehrszeichen, usw.) es sich handelt ("Klassifizierung"). Kann eine Einrichtung auch den Typ des Objektes identifizieren, so spricht man von "Klassifizieren". Die Wahrscheinlichkeit, mit welcher eine Einrichtung ein Objekt in einer bestimmten Situation korrekt identifizieren kann, wird mit dem sogenannten Konfidenzwert (für diese Einrichtung) beschrieben. Der Konfidenzwert hängt einerseits von der konkreten Situation ab (z.B. Helligkeit, Relativgeschwindigkeit zwischen Objekt und Einrichtung, Winkel zwischen Objekt und Einrichtung, Entfernung des Objektes zur Einrichtung, usw.) und andererseits davon, wie gut die Einrichtung hardware- und/oder softwareseitig zur Klassifizierung ausgestaltet ist. Während ersterer Punkt de facto nicht beeinflusst werden kann, hängt der zweite Aspekt von der grundlegenden Konzeption der Einrichtung und davon, wie gut seine Software/Algorithmen ausgestaltet sind bzw. trainiert werden, ab.

Unter dem Begriff "Bilderfassungseinrichtung" werden Einrichtungen verstanden, die prinzipiell dazu eingerichtet sind, ein Objekt nicht nur zu detektieren, sondern dieses auch klassifizieren zu können.

Eine "Umgebungserfassungseinrichtung" hat als Minimalerfordernis, dass zur Detektion von Objekten eingerichtet ist, ohne diese klassifizieren können zu müssen, es können aber auch Umgebungserfassungseinrichtungen zur Verwendung kommen, die auch zur Klassifizierung geeignet sind.

Es kann somit vorgesehen sein, dass eine Umgebungserfassungseinrichtung zur Detektion von Objekten, nicht aber zu deren Klassifikation eingerichtet ist.

Es kann aber auch vorgesehen sein, dass eine Umgebungserfassungseinrichtung zur Detektion von Objekten und zu deren Klassifikation eingerichtet ist.

Um eine zuverlässige Detektierung und/oder Objekterkennung zu erlauben, wie sie insbesondere für teilautonome oder autonome Fahrzeuge, aber auch für Assistenzsysteme in modernen Fahrzeugen zum Einsatz kommt, sind eingangs genannte Systeme, die einerseits über eine Bilderfassungseinrichtung verfügen und zusätzlich noch zumindest eine zusätzliche Umgebungserfassungseinrichtung aufweisen, von großem Vorteil, da durch die Erfassung eines Erfassungsbereiches und darin befindlicher Objekte durch zwei oder mehr Einrichtungen die Zuverlässigkeit deutlich erhöht werden kann (z.B. Stichwort "Sensorfusion").

Bei solchen Systemen kommt insbesondere eine Bilderfassungseinrichtung zum Einsatz, bei welcher es sich vorzugsweise um eine optische, d.h. im Bereich des sichtbaren Lichtes, unter Umständen auch im Bereich des IR-Spektrum arbeitende Einrichtung, beispielsweise unter Verwendung von einer oder mehreren entsprechenden Kameras oder Kamerasystemen (optisch und/oder IR-Bereich) handelt. Solche Bilderfassungseinrichtungen sind auch zur Klassifizierung von Objekten geeignet.

Mit einer oben beschriebenen Anordnung können die hohen derzeitigen und in Zukunft vermutlich noch steigenden Anforderungen von Fahrerassistenzsystemen bzw. autonomen Fahrzeugen unter vielen Umweltbedingungen gut erfüllt werden. Jede Sensorik, d.h. jede Erfassungseinrichtung hat einen beschränkten Arbeitsbereich - durch Kombination unterschiedlicher Sensoriken bzw. Sensortechnologien ist eine zuverlässige Objektdetektion und Klassifizierung unter vielen Bedingungen möglich.

Insbesondere Kameras sind für die Steuerung von selbstfahrenden Fahrzeugen und auch für Fahrassistenzsysteme von großer Bedeutung, da sie aktuell die einzige Art von Sensoreinrichtungen (Erfassungseinrichtungen) sind, welche eine Objekterkennung und Klassifizierung in der Regel zuverlässig durchführen können. Die Zuverlässigkeit der Erkennung wird, wie oben schon beschrieben, durch den Konfidenzwert bestimmt. Dieser beschreibt, wie sicher sich die Einrichtung ist, dass es sich um ein bestimmtes Objekt (z.B. ein Auto) handelt, welches das System klassifizieren kann.

Beispielsweise bei Nachtfahrten, Schlechtwettersituationen (Regen, Nebel, Schnee, Gischt) bzw. Blendung (Eigen- bzw. Fremdblendung) kann es zu, insbesondere Sicherheitsrelevanten, Situationen kommen, in welchen der Konfidenzwert ein Konfidenzlevel bzw. einen Grenzwert unterschreitet, ab welchem eine zuverlässige Objektklassifizierung nicht mehr gegeben ist. Dadurch kommt es zu starken Einschränkungen bezüglich der Nutzbarkeit eines eingangs genannten Systems, da sich eine Vielzahl an Situationen ergeben können, in welchen einen Objektklassifizierung nicht zuverlässig gegeben ist.

Es ist eine Aufgabe der Erfindung, eine Lösung dafür anzugeben, wie die Detektion und Klassifizierung von Objekten verbessert werden kann.

Diese Aufgabe wird dadurch gelöst, dass erfindungsgemäß das System dazu eingerichtet ist, wenn sich im Erfassungsbereich ein Objekt befindet,
- in Abhängigkeit des KO für das detektierte Objekt, oder
- wenn die Umgebungserfassungseinrichtung das Objekt detektiert und von der Bilderfassungseinrichtung dieses Objekt nicht detektiert wird, oder
- wenn die Umgebungserfassungseinrichtung das Objekt detektiert und von der Bilderfassungseinrichtung dieses Objekt detektiert wird,
   ∘ aber nicht klassifiziert werden kann, oder
   ∘ der KO einen definierten Grenzwert unterschreitet,
- oder wenn das System oder die Umgebungserfassungseinrichtung dazu eingerichtet ist, ein von der Umgebungserfassungseinrichtung erfasstes, im Erfassungsbereich der Beleuchtungseinrichtung liegendes und detektiertes Objekt hinsichtlich seines Typs zu klassifizieren und einen weiteren Konfidenzwert, den sogenannten NKO-Konfidenzwert, "NKO", zu ermitteln, welcher NKO angibt, mit welcher Wahrscheinlichkeit der Objekttyp des detektierten Objektes, insbesondere korrekt, festgestellt wurde,
   ∘ in Abhängigkeit des NKO für das Objekt, oder
   ∘ in Abhängigkeit des KO und des NKO für das Objekt, oder
   ∘ wenn KO < NKO gilt,
die Beleuchtungseinrichtung derart anzusteuern, dass die Beleuchtungsstärke im Bereich des Objektes erhöht oder verringert oder nicht verändert wird.

Beispielweise kann entsprechend der Erfindung vorgesehen sein, dass wenn von der Umgebungserfassungseinrichtung ein Objekt detektiert wird oder sogar klassifiziert werden kann, und von der Bilderfassungseinrichtung dieses Objekt nicht detektiert wird oder zwar detektiert wird aber nicht klassifiziert werden kann, die Helligkeit im Bereich des Objektes derart angepasst wird, dass auch die Bilderfassungseinrichtung das Objekt detektieren und vorzugsweise auch klassifizieren, insbesondere mit hoher Wahrscheinlichkeit korrekt klassifizieren kann.

Beispielsweise kann somit die optische Bilderfassungseinrichtung (optischer Sensor) selbst, oder ein weiteres Sensorsystem (Umgebungserfassungseinrichtung) mehr (oder weniger) Licht von der, beispielsweise hochauflösenden, Lichtquelle anfordern, um die notwendige Unterstützung zur Klassifizierung des Objekts zu erhalten.

Mit der Erfindung kann z.B. selbst bei Nacht, Schlechtwetter oder Blendungsszenarien eine zuverlässige Objekterkennung und Klassifizierung erzielt werden und dadurch eine bessere Nutzbarkeit des Systems erreicht werden.

Es kann vorgesehen sein, die Beleuchtungsstärke im Bereich des Objektes zu erhöhen oder zu verringern, wenn der KO einen definierten Grenzwert KOₘᵢₙ für den KO-Konfidenzwert unterschreitet. Beispielsweise wird die entsprechende Helligkeitsinformation aus den Bildinformationen der optischen Bilderfassungseinrichtung gewonnen.

Es kann vorgesehen sein, die Beleuchtungsstärke im Bereich des Objektes zu erhöhen oder zu verringern, wenn der KO geringer als der NKO ist. Um die Zuverlässigkeit der Objekterkennung deutlich zu erhöhen, wird im Fall, dass die zumindest eine Umgebungserfassungseinrichtung das Objekt zuverlässiger klassifizieren kann, als die Bilderfassungseinrichtung, die Helligkeit derart angepasst, dass auch die Bilderfassungseinrichtung das Objekt zuverlässiger oder zuverlässig klassifizieren kann. So wird die Objekterkennungszuverlässigkeit des gesamten Systems deutlich erhöht.

Vorzugsweise umfasst das System Konfidenzwertermittlungs-Mittel zum Ermitteln des KO und/oder des NKO. Typischerweise handelt es sich bei den Konfidenzwertermittlungs-Mitteln um einen Algorithmus oder Algorithmen, der/die in Form von einem oder mehreren ausführbaren Programmen auf einer Hardware ausgeführt wird bzw. werden. Es kann ein Algorithmus vorgesehen sein, welcher KO und NKO ermittelt, es kann aber für KO und NKO auch jeweils ein eigener oder jeweils zumindest ein eigener Algorithmus vorgesehen sein.

Es kann vorgesehen sein, dass das System zumindest eine Steuerungsvorrichtung zum Ansteuern der zumindest einen Beleuchtungseinrichtung in Abhängigkeit von KO, oder von NKO, oder von KO und NKO umfasst.

Konfidenzwertermittlungs-Mittel können beispielsweise von der Steuerungsvorrichtung oder in der Steuerungsvorrichtung realisiert sein, beispielsweise als ein oder mehrere Algorithmen, die z.B. auf der Steuerungsvorrichtung ausgeführt werden, um KO und/oder NKO zu berechnen. Der Algorithmus oder die Algorithmen können auch auf einer eigenständigen Berechnungsvorrichtung ausgeführt werden. Die Konfidenzwertermittlungs-Mittel werden mit entsprechenden Eingangsdaten von der zumindest einen, insbesondere optischen, Bilderfassungseinrichtung und/oder der zumindest einen, vorzugsweise nichtoptischen, Umgebungserfassungseinrichtung versorgt. Messdaten dieser Einrichtungen stellen die Eingangsdaten dar, die Konfidenzwertermittlungs-Mittel liefern entsprechende Ausgangsdaten (KO und/oder NKO), mit welchen die Steuerungsvorrichtung versorgt wird.

Es kann vorgesehen sein, dass die Beleuchtungseinrichtung zur Erzeugung einer Kraftfahrzeug-Lichtverteilung oder eines Teiles einer Kraftfahrzeug-Lichtverteilung eingerichtet ist, wobei beispielsweise die Beleuchtungseinrichtung ein Abblendlichtmodul zur Erzeugung einer Abblendlichtverteilung und/oder ein Fernlichtmodul zur Erzeugung einer Fernlichtverteilung oder ein kombiniertes Modul zur Erzeugung einer Abblendlicht- und einer Fernlichtverteilung umfasst.

Beispielsweise kann die Beleuchtungseinrichtung einzelansteuerbare Lichtquellen (z.B. Vorrichtungen, die mittels mehrerer Lichtquellen, etwa LEDs, eine Lichtverteilung erzeugen können, die aus mehreren Segmenten oder aus einer Vielzahl an Pixeln aufgebaut sind, wobei die Lichtquellen in der Regel unabhängig voneinander angesteuert werden können) oder hochauflösende Systeme (z.B.: DLP, Laserscanner-Systeme, MiniLED-Systeme, MicroLED-Systeme, LCD-Systeme, LCoS-Systeme) verwendet werden. Mit diesen kann die Helligkeit bzw. Beleuchtungsstärke im Bereich des Objektes gezielt angepasst werden, ohne die Helligkeit bzw. Beleuchtungsstärke in anderen Bereichen zu beeinflussen oder übermäßig zu beeinflussen.

Es können für die Beleuchtungseinrichtung auch Lichtquellen genutzt werden, welche für den Menschen nicht sichtbar sind (bspw. Infrarot-Lichtquellen), bzw. in Kombination mit sichtbaren Lichtquellen eingesetzt werden.

Beispielsweise ist vorgesehen, dass die Umgebungserfassungseinrichtung RADAR und/oder LIDAR und/oder einen auf Ultraschall basierende Sensoren und/oder eine IR-Kamera und/oder eine TOF-Kamera ("Time of Flight") und/oder eine MS ("Multispektral")-Kamera umfasst.

Vorzugsweise ist vorgesehen, dass die Bilderfassungseinrichtung eine oder mehrere Kameras bzw. ein oder mehrere Kamerasysteme, insbesondere optische Kameras/Kamerasysteme bzw. eine optische Kamera bzw. ein optisches Kamerasystem umfasst. Unter "optisch" ist zu verstehen, dass diese Kamera bzw. dieses System oder diese Einrichtung/Vorrichtung im sichtbaren Wellenlängenbereich arbeitet.

Es kann vorgesehen sein, dass die Bilderfassungseinrichtung im sichtbaren Wellenlängenbereich und/oder im nicht-sichtbaren Wellenlängenbereich, etwa im IR-Bereich arbeitet bzw. arbeiten.

Es kann vorgesehen sein, dass die Beleuchtungseinrichtung dazu eingerichtet ist, das Objekt dauerhaft zu beleuchten, oder wobei die Beleuchtungseinrichtung derart, z.B. getaktet, betrieben und vorzugsweise mit der Bilderfassungseinrichtung synchronisiert betrieben werden kann, dass das Objekt nur dann beleuchtet wird, wenn die Bilderfassungseinrichtung aktiv ist, oder wobei die Beleuchtungseinrichtung dazu eingerichtet ist, Lichtblitze, insbesondere zeitlich kurze Lichtblitze auf das Objekt abzugeben.

Die Dauer der Lichtblitze liegt hier typischer Weise im Millisekunden- oder Mikrosekunden-Bereich.

Vorzugsweise ist vorgesehen, dass die Beleuchtungseinrichtung Bestandteil eines Kraftfahrzeugscheinwerfers, insbesondere des Kraftfahrzeuges, ist.

Die eingangs genannte Aufgabe wird auch mit einem Kraftfahrzeug-Scheinwerfer für ein Kraftfahrzeug, insbesondere für ein autonomes oder teilautonomes Kraftfahrzeug, gelöst, wobei der Kraftfahrzeug-Scheinwerfer ein vorstehend beschriebenes System umfasst, wobei vorzugsweise die optische Bilderfassungseinrichtung in einem seitlichen Randbereich des Scheinwerfers angeordnet ist.

Außerdem wird die Erfindung mit einem Kraftfahrzeug mit einem, vorzugsweise zwei, einem linken und einem rechten, Kraftfahrzeug-Scheinwerfer wie vorstehend beschrieben gelöst, wobei vorzugsweise zumindest die Beleuchtungseinrichtung Bestandteil eines Kraftfahrzeug-Scheinwerfers des Kraftfahrzeuges ist.

Schließlich wird die Erfindung auch noch mit einem Verfahren zur Überwachung der Umgebung eines Kraftfahrzeuges, insbesondere eines autonomen oder teilautonomen Kraftfahrzeuges, wobei zur Durchführung des Verfahrens ein System nach einem der Ansprüche 1 bis 11 bzw. zumindest ein, oder zwei, insbesondere ein linker und ein rechter Scheinwerfer eines Kraftfahrzeuges nach Anspruch 13, verwendet werden.

Im Folgenden ist die Erfindung an Hand der Zeichnung näher erläutert. In dieser zeigt
- Fig. 1: ein Kraftfahrzeug mit einem erfindungsgemäßen System, und
- Fig. 2: ein erfindungsgemäßes System in einer schematischen Funktionsdarstellung.

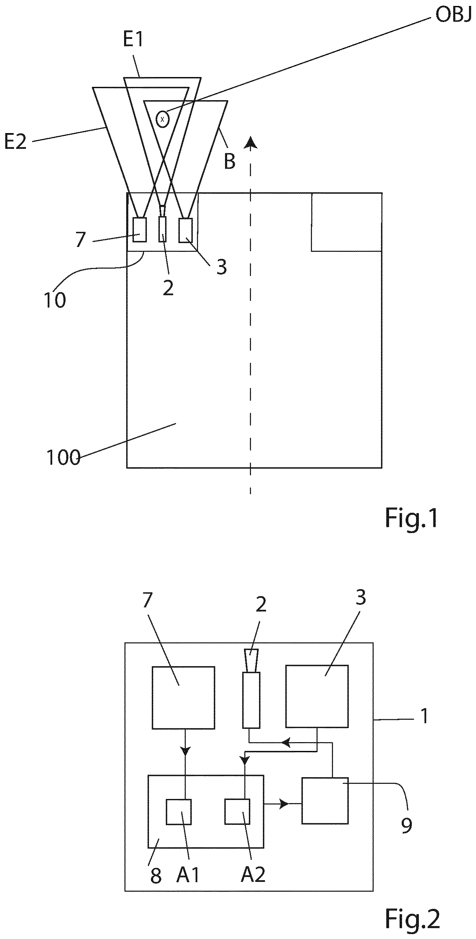

**Figur 1** zeigt ein Kraftfahrzeug 100, z.B. ein autonomes oder teilautonomes Kraftfahrzeug, welches an seiner Vorderseite zwei Kraftfahrzeug-Scheinwerfer aufweist, wobei in dem in **Figur 1** gezeigten, nicht einschränkenden Beispiel der linke Scheinwerfer 10 ein erfindungsgemäßes System 1 umfasst bzw. ein solches System 1 in dem Scheinwerfer 10 zumindest teilweise integriert ist.

Das erfindungsgemäße System 1 dient zur Überwachung der Umgebung des Kraftfahrzeuges 100, insbesondere der vor dem Kraftfahrzeug und/oder seitlich (links und/oder rechts) vor dem Kraftfahrzeug liegenden Umgebung. Das System 1 umfasst in dem gezeigten Beispiel eine Bilderfassungseinrichtung 2, insbesondere eine optische Bilderfassungseinrichtung 2, wobei die Bilderfassungseinrichtung 2 zur Erfassung eines Erfassungsbereiches E1 der Umgebung, und insbesondere zur Erfassung von Objekten in dem Erfassungsbereich E1 eingerichtet ist.

Bei der Bilderfassungseinrichtung 2 handelt es sich vorzugsweise um eine oder mehrere Kameras bzw. ein oder mehrere Kamerasysteme, vorzugsweise optische Kameras/Kamerasysteme bzw. eine optische Kamera bzw. ein optisches Kamerasystem. Unter "optisch" ist zu verstehen, dass diese Kamera bzw. dieses System oder diese Einrichtung/Vorrichtung im sichtbaren Wellenlängenbereich arbeitet.

Weiters umfasst das System eine Beleuchtungseinrichtung 3, wobei der Erfassungsbereich E1 der zumindest einen Bilderfassungseinrichtung 2 teilweise, vorzugsweise vollständig, von der Beleuchtungseinrichtung 3 beleuchtet werden kann, wie dies in **Figur 1** durch den Beleuchtungsbereich B schematisch dargestellt ist. Die Formulierung "beleuchten kann" bedeutet dabei im allgemeinen Zusammenhang der vorliegenden Erfindung, dass entweder, sobald die Beleuchtungseinrichtung 3 eingeschaltet ist, der Beleuchtungsbereich B den Erfassungsbereich E1 zumindest teilweise beleuchtet, wie in **Figur 1** dargestellt, oder dass die Beleuchtungseinrichtung 3 Licht in den Erfassungsbereich E1 lenken kann.

Bei der Beleuchtungseinrichtung 3 handelt es sich vorzugsweise um eine Beleuchtungseinrichtung zur Erzeugung einer Kraftfahrzeug-Lichtverteilung oder eines Teiles einer Kraftfahrzeug-Lichtverteilung, wobei beispielsweise die Beleuchtungseinrichtung 3 ein Abblendlichtmodul zur Erzeugung einer Abblendlichtverteilung und/oder ein Fernlichtmodul zur Erzeugung einer Fernlichtverteilung oder ein kombiniertes Modul zur Erzeugung einer Abblendlicht- und einer Fernlichtverteilung ist oder umfasst. Vorzugsweise ist entsprechend die Beleuchtungseinrichtung 3 in den Scheinwerfer 10 eingebaut.

Beispielsweise kann die Beleuchtungseinrichtung 3 einzelansteuerbare Lichtquellen (z.B. Vorrichtungen, die mittels mehrerer Lichtquellen, etwa LEDs, eine Lichtverteilung erzeugen können, die aus mehreren Segmenten oder aus einer Vielzahl an Pixeln aufgebaut sind, wobei die Lichtquellen in der Regel unabhängig voneinander angesteuert werden können) oder hochauflösende Systeme (z.B.: DLP, Laserscanner-Systeme, MiniLED-Systeme, MicroLED-Systeme, LCD-Systeme, LCoS-Systeme) verwendet werden. Mit diesen kann die Helligkeit bzw. Beleuchtungsstärke im Bereich des Objektes gezielt angepasst werden, ohne die Helligkeit bzw. Beleuchtungsstärke in anderen Bereichen zu beeinflussen oder übermäßig zu beeinflussen.

Es können für die Beleuchtungseinrichtung 3 auch Lichtquellen genutzt werden, welche für den Menschen nicht sichtbar sind (bspw. Infrarot-Lichtquellen), bzw. in Kombination mit sichtbaren Lichtquellen eingesetzt werden.

Es kann vorgesehen sein, dass die Beleuchtungseinrichtung 3 dazu eingerichtet ist, das Objekt OBJ dauerhaft zu beleuchten, oder die Beleuchtungseinrichtung 3 ist derart, z.B. getaktet, betrieben und vorzugsweise mit der Bilderfassungseinrichtung 2 synchronisiert betrieben, dass das Objekt nur dann beleuchtet wird, wenn die Bilderfassungseinrichtung 2 aktiv ist, oder die Beleuchtungseinrichtung 3 dazu eingerichtet ist, Lichtblitze, insbesondere zeitlich kurze Lichtblitze auf das Objekt abzugeben. Die Dauer der Lichtblitze liegt hier typischer Weise im Millisekunden- oder Mikrosekunden-Bereich.

Weiters umfasst das System 1 eine Umgebungserfassungseinrichtung 7, wobei die Umgebungserfassungseinrichtung 7 dazu eingerichtet ist, zumindest einen Teil des Erfassungsbereiches E1 der Bilderfassungseinrichtung 2, vorzugsweise den gesamten Erfassungsbereich, zu erfassen. Der Erfassungsbereich der Umgebungserfassungseinrichtung 7 ist in **Figur 1** mit dem Bezugszeichen E2 bezeichnet. Beispielsweise kann vorgesehen sein, dass die Umgebungserfassungseinrichtung 7 als RADAR und/oder LIDAR ausgebildet ist oder umfasst und/oder einen auf Ultraschall basierende Sensoren und/oder eine IR-Kamera und/oder eine TOF-Kamera ("Time of Flight") und/oder eine MS ("Multispektral")-Kamera und/oder eine Wärmebildkamera umfasst. Es kann vorgesehen sein, dass die Bilderfassungseinrichtung 2 im sichtbaren Wellenlängenbereich und/oder im nicht-sichtbaren Wellenlängenbereich, etwa im IR-Bereich arbeitet.

Das System 1 oder die Bilderfassungseinrichtung 2 ist dazu eingerichtet, ein in dem Erfassungsbereich E1 der Bilderfassungseinrichtung 2 befindliches Objekt OBJ, wenn es detektiert wurde, hinsichtlich seines Objekttyps zu klassifizieren, und einen Konfidenzwert, den sogenannten KO-Konfidenzwert, "KO", zu ermitteln, welcher KO angibt, mit welcher Wahrscheinlichkeit der Objekttyp des detektierten Objektes von der Bilderfassungseinrichtung 2, insbesondere korrekt, festgestellt wurde.

Unterschiedliche Objekttypen sind beispielsweise PKW, LKW, ein- oder mehrspurige Krafträder, Fahrräder, Fußgänger, usw.

Der KO gibt somit an, wie sicher das System ist, dass ein detektiertes Objekt einen bestimmten Objekttyp hat.

Weiters ist das System 1 dazu eingerichtet, dass im Fall, dass wenn sich im Erfassungsbereich E1 ein Objekt OBJ befindet, wie dies in **Figur 1** dargestellt ist,
- in Abhängigkeit des KO für das detektierte Objekt OBJ, oder
- wenn die Umgebungserfassungseinrichtung 7 das Objekt OBJ detektiert und von der Bilderfassungseinrichtung 2 dieses Objekt OBJ nicht detektiert wird, obwohl es sich im Erfassungsbereich E1 der Bilderfassungseinrichtung 2 befindet, oder
- wenn die Umgebungserfassungseinrichtung 7 das Objekt detektiert und von der Bilderfassungseinrichtung 2 dieses Objekt detektiert wird,
   ∘ aber von der Bilderfassungseinrichtung 2 nicht klassifiziert werden kann, oder
   ∘ der KO einen definierten Grenzwert unterschreitet,
- oder wenn das System 1 oder die Umgebungserfassungseinrichtung 7 dazu eingerichtet ist, ein von der Umgebungserfassungseinrichtung 7 erfasstes, im Erfassungsbereich E1 der Bilderfassungseinrichtung 2 liegendes und detektiertes Objekt hinsichtlich seines Typs zu klassifizieren und einen weiteren Konfidenzwert, den sogenannten NKO-Konfidenzwert, "NKO", zu ermitteln, welcher NKO angibt, mit welcher Wahrscheinlichkeit der Objekttyp des detektierten Objektes von der Umgebungserfassungseinrichtung 7, insbesondere korrekt, festgestellt werden kann,
   ∘ in Abhängigkeit des NKO für das Objekt OBJ, oder
   ∘ in Abhängigkeit des KO und des NKO für das Objekt OBJ, oder
   ∘ wenn KO < NKO gilt, oder
die Beleuchtungseinrichtung 3 derart anzusteuern, dass die Beleuchtungsstärke im Bereich des Objektes OBJ erhöht oder verringert oder nicht verändert wird.

Beispielsweise kann entsprechend der Erfindung vorgesehen sein, dass wenn von der Umgebungserfassungseinrichtung 7 ein Objekt detektiert wird oder sogar klassifiziert werden kann, und von der Bilderfassungseinrichtung 2 diese Objekt nicht detektiert wird oder zwar detektiert wird aber nicht klassifiziert werden kann, die Helligkeit im Bereich des Objektes derart angepasst wird, in der Regel erhöht aber z.B. im Fall von vorliegender Blendung auch verringert wird, dass auch die Bilderfassungseinrichtung 2 das Objekt OBJ detektieren und vorzugsweise auch klassifizieren, insbesondere mit hoher Wahrscheinlichkeit korrekt klassifizieren kann.

Es wird somit der KO der Bilderfassungseinrichtung 2 erhöht, insbesondere so weit erhöht, dass im Rahmen der jeweiligen Anwendung und dem Grad der notwendigen Sicherheit dieser Anwendung die Detektierung und insbesondere Klassifizierung eines Objektes durch die Bilderfassungseinrichtung 2 mit ausreichend hoher Wahrscheinlichkeit erfolgen kann.

Beispielsweise kann vorgesehen sein, dass die Beleuchtungsstärke im Bereich des Objektes OBJ erhöht oder verringert wird, wenn der KO einen definierten Grenzwert KOₘᵢₙ für den KO-Konfidenzwert unterschreitet.

Der Wert für diesen definierten Grenzwert KOₘᵢₙ hängt wiederum von der jeweiligen Anwendung ab.

Es kann auch vorgesehen sein, dass die Beleuchtungsstärke im Bereich des Objektes OBJ erhöht oder verringert wird, wenn der KO geringer als der NKO ist. Um die Zuverlässigkeit der Objekterkennung deutlich zu erhöhen, wird im Fall, dass die eine Umgebungserfassungseinrichtung 7 das Objekt 2 zuverlässiger klassifizieren kann, als die Bilderfassungseinrichtung 2, die Helligkeit derart angepasst, dass auch die Bilderfassungseinrichtung 2 das Objekt 3 zuverlässiger oder zuverlässig klassifizieren kann. So wird die Objekterkennungszuverlässigkeit des gesamten Systems 1 deutlich erhöht.

**Figur 2** zeigt grob schematisch noch einmal einen Überblick über Komponenten des erfindungsgemäßen Systems 1, nämlich die Bilderfassungseinrichtung 2, die Umgebungserfassungseinrichtung 7 und die Beleuchtungseinrichtung 3.

Vorzugsweise umfasst das System Konfidenzwertermittlungs-Mittel A1, A2 zum Ermitteln des KO und/oder des NKO. Typischerweise handelt es sich bei den Konfidenzwertermittlungs-Mitteln um einen Algorithmus oder Algorithmen A1, A2, die in Form von einem oder mehreren ausführbaren Programmen auf einer Hardware 8 ausgeführt werden. Es kann ein Algorithmus vorgesehen sein, welcher KO und NKO ermittelt, es kann aber für KO und NKO auch jeweils ein eigener oder jeweils zumindest ein eigener Algorithmus A1, A2 vorgesehen sein.

Außerdem kann vorgesehen sein, dass das System eine Steuerungsvorrichtung 9 zum Ansteuern der Beleuchtungseinrichtung 3 in Abhängigkeit von KO, oder von NKO, oder von KO und NKO umfasst, wobei KO und/oder NKO von den Konfidenzwertermittlungs-Mitteln A1, A2 oder der Hardware 8, auf welchen diese ausgeführt werden, an die Steuerungsvorrichtung 9 übermittelt werden.

Es kann auch vorgesehen sein, dass die Steuerungsvorrichtung 9 in die Hardware 8 integriert ist und/oder auf dieser ausgeführt wird.

Das System 1 wie in **Figur 2** schematisch dargestellt kann z.B. vollständig in einen Kraftfahrzeugscheinwerfer integriert sein und z.B. auf in dem Scheinwerfer ohnehin vorhandene Komponenten, d.h. z.B. auf die Beleuchtungseinrichtung zugreifen. Es kann aber auch vorgesehen sein, dass beispielsweise die Hardware 8 und/oder die Steuerungsvorrichtung 9 nicht Bestandteil des Kraftfahrzeugscheinwerfers, sondern Bestandteil des Kraftfahrzeuges sind. Alternativ oder zusätzlich können auch die Bilderfassungseinrichtung 2 und/oder die Umgebungserfassungseinrichtung 7 außerhalb des Kraftfahrzeugscheinwerfers in dem Kraftfahrzeug angeordnet sein.

## Patentansprüche

1. System (1) zur Überwachung der Umgebung eines Kraftfahrzeuges (100), insbesondere eines autonomen oder teilautonomen Kraftfahrzeuges, wobei das System (1) umfasst:
• zumindest eine Bilderfassungseinrichtung (2), insbesondere eine optische Bilderfassungseinrichtung (2), wobei die Bilderfassungseinrichtung (2) zur Erfassung eines Erfassungsbereiches (E1) der Umgebung, insbesondere zur Erfassung von Objekten in dem Erfassungsbereich (E1) eingerichtet ist,
• zumindest eine Beleuchtungseinrichtung (3), wobei der Erfassungsbereich (E1) der zumindest einen Bilderfassungseinrichtung (2) teilweise, vorzugsweise vollständig, von der Beleuchtungseinrichtung (3) beleuchtet werden kann, und
• zumindest eine Umgebungserfassungseinrichtung (7), wobei die Umgebungserfassungseinrichtung (7) dazu eingerichtet ist, zumindest einen Teil des Erfassungsbereiches (E1) der Bilderfassungseinrichtung (2), vorzugsweise den gesamten Erfassungsbereich (E1), zu erfassen, wobei die zumindest eine Umgebungserfassungseinrichtung (7) insbesondere zur Detektierung von Objekten eingerichtet ist,
• wobei das System (1) oder die Bilderfassungseinrichtung (2) dazu eingerichtet ist,
∘ ein in einem Erfassungsbereich der zumindest einen Bilderfassungseinrichtung (2) befindliches Objekt, wenn es detektiert wurde, hinsichtlich seines Objekttyps zu klassifizieren, und
∘ jeweils einen Konfidenzwert, den sogenannten KO-Konfidenzwert, "KO", zu ermitteln, welcher KO angibt, mit welcher Wahrscheinlichkeit der Objekttyp eines detektierten Objektes von der Bilderfassungseinrichtung (2), insbesondere korrekt, festgestellt werden kann,
**dadurch gekennzeichnet, dass**
das System (1) dazu eingerichtet ist, wenn sich im Erfassungsbereich (E1) ein Objekt (OBJ) befindet,
- in Abhängigkeit des KO für das detektierte Objekt (OBJ), oder
- wenn die Umgebungserfassungseinrichtung (7) das Objekt detektiert und von der Bilderfassungseinrichtung (2) dieses Objekt nicht detektiert wird, oder
- wenn die Umgebungserfassungseinrichtung (7) das Objekt detektiert und von der Bilderfassungseinrichtung (2) dieses Objekt detektiert wird,
∘ aber nicht klassifiziert werden kann, oder
∘ der KO einen definierten Grenzwert unterschreitet,
- oder wenn das System (1) oder die Umgebungserfassungseinrichtung (7) dazu eingerichtet ist, ein von der Umgebungserfassungseinrichtung (7) erfasstes, im Erfassungsbereich (E1) der Beleuchtungseinrichtung (2) liegendes und detektiertes Objekt hinsichtlich seines Typs zu klassifizieren und einen weiteren Konfidenzwert, den sogenannten NKO-Konfidenzwert, "NKO", zu ermitteln, welcher NKO angibt, mit welcher Wahrscheinlichkeit der Objekttyp des detektierten Objektes, insbesondere korrekt, festgestellt wurde,
∘ in Abhängigkeit des NKO für das Objekt (OBJ), oder
∘ in Abhängigkeit des KO und des NKO für das Objekt (OBJ), oder
∘ wenn KO < NKO gilt,
die Beleuchtungseinrichtung (3) derart anzusteuern, dass die Beleuchtungsstärke im Bereich des Objektes (OBJ) erhöht oder verringert oder nicht verändert wird.

2. System nach Anspruch 1, wobei es dazu eingerichtet ist, die Beleuchtungsstärke im Bereich des Objektes (OBJ) zu erhöhen oder zu verringern, wenn der KO einen definierten Grenzwert KOₘᵢₙ für den KO-Konfidenzwert unterschreitet.

3. System nach Anspruch 1 oder 2, wobei es dazu eingerichtet ist, die Beleuchtungsstärke im Bereich des Objektes (OBJ) zu erhöhen oder zu verringern, wenn der KO geringer als der NKO ist.

4. System nach einem der Ansprüche 1 bis 3, umfassend Konfidenzwertermittlungs-Mittel (A1, A2) zum Ermitteln des KO und/oder des NKO.

5. System nach einem der Ansprüche 1 bis 4, umfassend zumindest eine Steuerungsvorrichtung (9) zum Ansteuern der zumindest einen Beleuchtungseinrichtung (3) in Abhängigkeit von KO, oder von NKO, oder von KO und NKO.

6. System nach einem der Ansprüche 1 bis 5, wobei die Beleuchtungseinrichtung (3) zur Erzeugung einer Kraftfahrzeug-Lichtverteilung oder eines Teiles einer Kraftfahrzeug-Lichtverteilung eingerichtet ist, wobei beispielsweise die Beleuchtungseinrichtung (3) ein Abblendlichtmodul (3) zur Erzeugung einer Abblendlichtverteilung und/oder ein Fernlichtmodul (4) zur Erzeugung einer Fernlichtverteilung oder ein kombiniertes Modul zur Erzeugung einer Abblendlicht- und einer Fernlichtverteilung umfasst.

7. System nach einem der Ansprüche 1 bis 6, wobei die Umgebungserfassungseinrichtung (7) RADAR und/oder LIDAR und/oder einen auf Ultraschall basierende Sensoren und/oder eine IR-Kamera und/oder eine TOF-Kamera ("Time of Flight") und/oder eine MS ("Multispektral")-Kamera und/oder eine Wärmebildkamera umfasst.

8. System nach einem der Ansprüche 1 bis 7, wobei die Bilderfassungseinrichtung (2) eine oder mehrere Kameras bzw. ein oder mehrere Kamerasysteme umfasst.

9. System nach einem der Ansprüche 1 bis 8, wobei die Bilderfassungseinrichtung (2) im sichtbaren Wellenlängenbereich und/oder im nicht-sichtbaren Wellenlängenbereich, etwa im IR-Bereich arbeitet bzw. arbeiten.

10. System nach einem der Ansprüche 1 bis 9, wobei die Beleuchtungseinrichtung (3) dazu eingerichtet ist, das Objekt (OBJ) dauerhaft zu beleuchten, oder wobei die Beleuchtungseinrichtung (3) derart, z.B. getaktet, betrieben und vorzugsweise mit der Bilderfassungseinrichtung (2) synchronisiert betrieben werden kann, dass das Objekt nur dann beleuchtet wird, wenn die Bilderfassungseinrichtung (2) aktiv ist, oder wobei die Beleuchtungseinrichtung (3) dazu eingerichtet ist, Lichtblitze, insbesondere zeitlich kurze Lichtblitze auf das Objekt abzugeben.

11. System nach einem der Ansprüche 1 bis 10, wobei die Beleuchtungseinrichtung (3) Bestandteil eines Kraftfahrzeugscheinwerfers (10), insbesondere des Kraftfahrzeuges (100), ist.

12. Kraftfahrzeug-Scheinwerfer für ein Kraftfahrzeug (100), insbesondere ein autonomes oder teilautonomes Kraftfahrzeug, wobei der Kraftfahrzeug-Scheinwerfer (10) ein System (1) nach einem der Ansprüche 1 bis 11 umfasst, wobei vorzugsweise die optische Bilderfassungseinrichtung (2) in einem seitlichen Randbereich des Scheinwerfers (10) angeordnet ist.

13. Kraftfahrzeug mit einem, vorzugsweise zwei, einem linken und einem rechten, Kraftfahrzeug-Scheinwerfer (10) nach Anspruch 12, wobei vorzugsweise zumindest die Beleuchtungseinrichtung (3) Bestandteil eines Kraftfahrzeug-Scheinwerfers (10) des Kraftfahrzeuges (100) ist.

14. Verfahren zur Überwachung der Umgebung eines Kraftfahrzeuges (100), insbesondere eines autonomen oder teilautonomen Kraftfahrzeuges, wobei zur Durchführung des Verfahrens ein System (1) nach einem der Ansprüche 1 bis 11 bzw. zumindest ein, oder zwei, insbesondere ein linker und ein rechter Scheinwerfer eines Kraftfahrzeuges nach Anspruch 13, verwendet werden.
